(19) Europäisches Patentamt

**European Patent Office**

**Office européen des brevets**

(11) Veröffentlichungsnummer: **0 235 120 B1**

(12) **EUROPÄISCHE PATENTSCHRIFT**

(45) Veröffentlichungstag der Patentschrift: **15.04.92**

(21) Anmeldenummer: **87890032.3**

(22) Anmeldetag: **19.02.87**

(51) Int. Cl.⁵: **G01N 1/10**, G01N 1/12, G01N 1/28, C21C 5/46

(54) **Verfahren zum Gewinnen einer Probe aus einem Schmelzensumpf mittels einer Probenahmesonde sowie Vorrichtung zur Durchführung des Verfahrens.**

(30) Priorität: **27.02.86 AT 510/86**

(43) Veröffentlichungstag der Anmeldung:
**02.09.87 Patentblatt 87/36**

(45) Bekanntmachung des Hinweises auf die Patenterteilung:
**15.04.92 Patentblatt 92/16**

(84) Benannte Vertragsstaaten:
**DE GB IT LU NL**

(56) Entgegenhaltungen:
**EP-A- 0 011 005**
**FR-A- 2 410 236**
**GB-A- 1 349 774**

(73) Patentinhaber: **VOEST-ALPINE INDUSTRIEAN-LAGENBAU GESELLSCHAFT m.b.H.**
**Turmstrasse 44**
**A-4020 Linz(AT)**

(72) Erfinder: **Die Erfinder haben auf ihre Nennung verzichtet**

(74) Vertreter: **Wolfram, Gustav, Dipl.-Ing.**
**Schwindgasse 7 P.O. Box 205**
**A-1041 Wien(AT)**

## Beschreibung

Die Erfindung betrifft ein Verfahren zum Gewinnen einer Probe aus einem Schmelzensumpf mittels einer zylindrischen Probenahmesonde, die eine Aufnahmeöffnung für die Probe besitzt, sowie eine Vorrichtung zur Durchführung des Verfahrens.

Die Entnahme von Metallproben aus einem metallurgischen Gefäß, wie einem Konverter, erfolgt vielfach mit Probenahmesonden, die jeweils von einem Papprohr gebildet sind, welches nur einmal verwendet wird. Das Papprohr wird bei einer Probenahme auf eine Lanze aufgeschoben und mittels dieser in die Schmelze eingetaucht. An seinem in die Schmelze eintauchenden Ende ist das Papprohr verschlossen. Es weist einen nahe dem unteren Ende liegenden Hohlraum auf, in den durch eine seitliche Öffnung die Schmelze während des Eintauchens eindringt.

Nach dem Ausfahren der Probenahmesonde aus dem metallurgischen Gefäß muß die Probe aus dem nur oberflächlich verkohlten, sonst aber noch intakten Papprohr entnommen und zur Analyse in ein Labor gebracht werden. Da die Analysenwerte sehr schnell benötigt werden - um noch vor Abstich der Schmelze steuernd in den Schmelzprozeß eingreifen zu können -, ist es notwendig, die Probe innerhalb einer sehr kurzen Zeitspanne dem Labor zur Verfügung zu stellen.

Es ist bekannt (interner Stand der Technik), zur Entnahme der Probe aus dem Papprohr das Papprohr knapp oberhalb der Probe vom restlichen Teil zu trennen und die Probe aus dem abgetrennten Teil des Papprohres hydraulisch auszupressen. Dies hat jedoch den Nachteil, daß die gesamte Probe zum Labor geschickt werden muß, so daß die dafür vorgesehene Beförderungsanlage entsprechend aufwendig gestaltet sein muß. Bei Verwendung einer Rohrpostanlage müssen die Leitungen einen großen Krümmungsradius aufweisen und ist eine große Druckluftmenge erforderlich.

Weiters muß im Labor aus der Probe erst ein analysengerechtes Stück herausgeschnitten werden, was einen zusätzlichen Zeitaufwand darstellt. Bei der Beförderung mit einer Rohrpostanlage können weiters Schwierigkeiten auftreten, da die hydraulisch ausgepreßte Probe eine unregelmäßige Oberfläche, insbesondere einen seitlich vorstehenden Gußansatz, aufweist, der von der in den Hohlraum des Papprohres mündenden seitlichen Öffnung herrührt.

Die Erfindung bezweckt die Vermeidung dieser Nachteile und Schwierigkeiten und stellt sich die Aufgabe, ein Verfahren sowie eine Vorrichtung zur Durchführung des Verfahrens zu schaffen, welche das Gewinnen eines kleinen analysengerechten Probenstückes in einer möglichst kurzen Zeitspanne gestatten, wobei das Probenstück in einfacher Weise, mit geringem Aufwand und geringer Störanfälligkeit in das Labor geschickt werden kann.

Diese Aufgabe wird erfindungsgemäß dadurch gelöst, daß nach Probenahme zunächst mit einem ersten, sich in radialer Richtung der Probenahmesonde erstreckenden Umfangsschnitt die Probenahmesonde oder ein von ihr abgelängter Probenahmensondenteil in Höhe der Probe durchtrennt wird, wobei jedoch die Probe ungeschnitten bleibt, daß sodann der die Probe haltende Teil der Probenahmesonde bzw. des Probenahmesondenteiles vom restlichen Teil der Probenahmesonde bzw. des Probenahmesondenteiles durch Abziehen in axialer Richtung getrennt wird und daß anschließend der aus dem Teil der Probenahmesonde bzw. des Probenahmesondenteiles herausragende Teil der Probe mittels eines zweiten Schnittes vom die Probe haltenden Teil der Probenahmesonde bzw. des Probenahmesondenteiles abgetrennt wird.

Besonders schnell läßt sich das Probenstück entnehmen, wenn der Umfangsschnitt unter Drehung der Probenahmesonde bzw. des Probenahmesondenteiles um ihre (seine) Längsachse durchgeführt wird.

Eine Vorrichtung zur Durchführung des Verfahrens ist kennzeichnet durch
- eine erste und zweite Spanneinrichtung zum Halten der Probenahmesonde bzw. des Probenahmesondenteiles beiderseits der Probe, wobei die Spanneinrichtungen zueinander und voneinander mittels einer Bewegungseinrichtung bewegbar sind,
- und eine Schneideinrichtung, insbesondere eine Trennscheibe, die in Richtung zur Probe und von dieser wegbewegbar ist, und

wobei vorzugsweise zur Steigerung der Entnahmegeschwindigkeit mindestens eine Spanneinrichtung um die Achse der Probenahmesonde bzw. des Probenahmesondenteiles drehbar ist.

Zweckmäßig sind die Spannbacken der zweiten Spanneinrichtung als drehbare Rollen ausgebildet, deren Drehachse parallel zur Achse der Probenahmesonde bzw. des Probenahmesondenteiles gerichtet ist.

Zum einfachen Abziehen des die Probe enthaltenden Papprohrteiles vom restlichen Papprohrteil ist vorteilhaft die zweite Spanneinrichtung mittels einer Stelleinrichtung von und zur ersten Spanneinrichtung bewegbar.

Zur Sicherstellung eines Schnittes in stets gleicher Höhe ist zweckmäßig oberhalb der ersten Spanneinrichtung ein Einlauftrichter zur Führung der Probenahmesonde bzw. des Probenahmesondenteiles vorgesehen und ist unterhalb des Einlauftrichters ein höhenverstellbarer mit der Probenahmesonde bzw. dem Probenahmesondenteil in und außer Eingriff bringbarer Anschlag vorgesehen.

Eine bevorzugte Ausführungsform, gemäß der eine sichere Schnittführung und damit stets gleich große Probenstücke herstellbar sind, ist gekennzeichnet durch eine dritte Spanneinrichtung zum Einspannen der Probe des die Probe enthaltenden Teiles der Probenahmesonde bzw. des Probenahmesondenteiles, wobei zweckmäßig die zweite Spanneinrichtung von einer mit der ersten Spanneinrichtung fluchtenden Position in eine zur dritten Spanneinrichtung fluchtende Position bewegbar ist.

Um mit einer einzigen Schneideinrichtung das Auslangen zu finden, ist zweckmäßig die dritte Spanneinrichtung seitlich neben der ersten Spanneinrichtung in gleicher Höhe wie diese angeordnet und ist die Schneideinrichtung wahlweise zur ersten oder zur dritten Spanneinrichtung bewegbar.

Eine schnelle Ausgabe der Probenstücke wird vorteilhaft dadurch erzielt, daß unterhalb der dritten Spanneinrichtung eine Probenführungseinrichtung angeordnet ist, die in und aus einer die Probe weiterfördernden Stellung bringbar ist.

Um eine Verfälschung der Analysenwerte der Probe zu vermeiden, sind zweckmäßig die erste, zweite und dritte Spanneinrichtung, die Schneideinrichtung sowie die Probenführungseinrichtung in einem trichterförmigen Gefäß angeordnet, das an der Trichterspitze eine Auslaßöffnung aufweist, wobei vorteilhaft die Auslaßöffnung mittels einer Verschlußeinrichtung, wie eines Schiebers, verschließbar ist und der Einlauftrichter mittels einer Verschlußeinrichtung, wie eines Schiebers, verschließbar ist.

Zweckmäßig mündet in das Gefäß eine Gaszuführungsleitung zur Füllung des Gefäßes mit einem nicht brennbaren Gas, wie Stickstoff. Hierdurch ist es möglich, das Gefäß mit einem inerten Gas zu spülen, so daß eine Oxidation der noch sehr heißen Probe während des Entnehmens vermieden werden kann.

Um die Trennscheibe entsprechend ihrem Durchmesser automatisch steuern zu können, ist vorteilhaft zum Ermitteln des Durchmessers der Trennscheibe (34) eine Tasteinrichtung (64) vorgesehen.

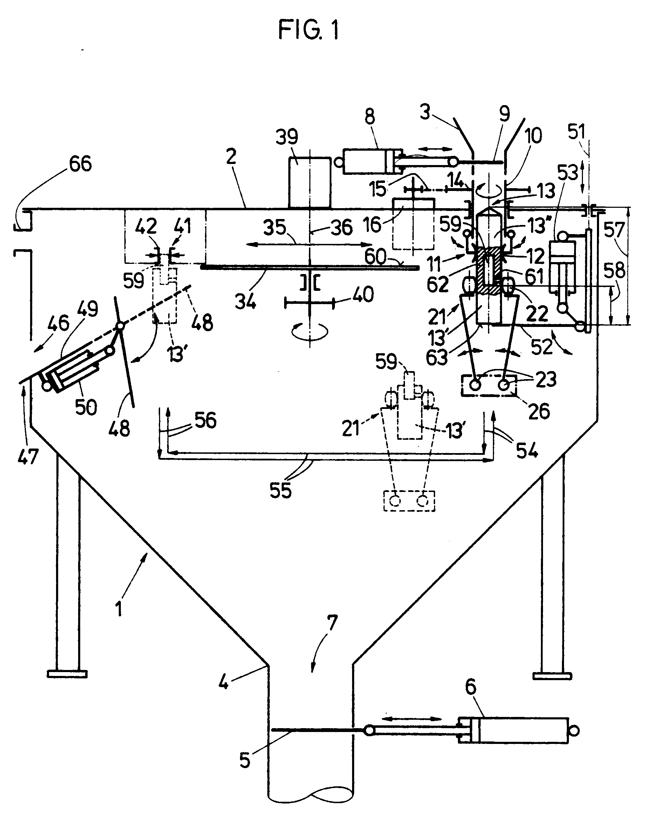

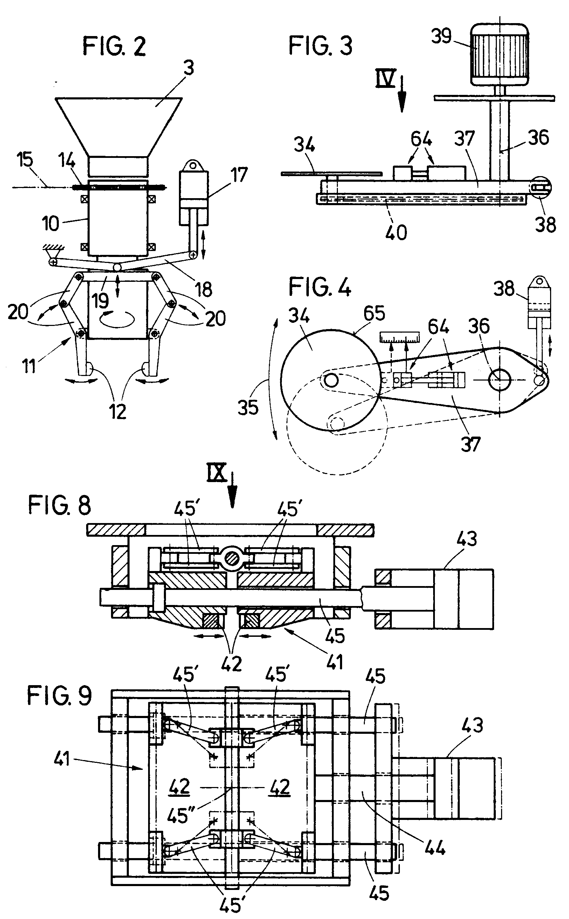

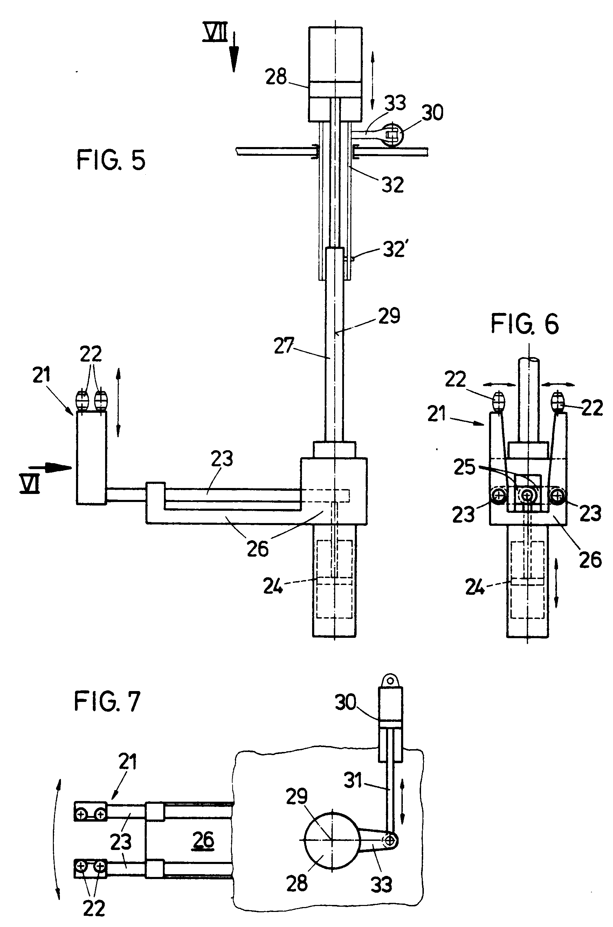

Die Erfindung ist nachstehend anhand der Zeichnung an einem Ausführungsbeispiel näher erläutert, wobei Fig. 1 eine schematisch dargestellte, teilweise geschnittene Gesamtansicht der Vorrichtung zeigt. In den Fig. 2 bis 9 sind in vergrößerter Darstellung Details näher veranschaulicht, wobei Fig. 2 eine drehbare Spanneinrichtung, Fig. 3 die Schneideinrichtung samt Antrieb und Fig. 4 eine Ansicht in Richtung des Pfeiles IV der Fig. 3 darstellen. Die Fig. 5 bis 7 veranschaulichen eine heb- und senkbare sowie schwenkbare Spanneinrichtung, wobei Fig. 5 diese Spanneinrichtung in Seitenansicht, Fig. 6 in Richtung des Pfeiles VI der Fig. 5 und Fig. 7 in Richtung des Pfeiles VII der Fig. 5 zeigen. Die Fig. 8 und 9 stellen die dritte Spanneinrichtung dar, wobei Fig. 9 eine Ansicht in Richtung des Pfeiles IX der Fig. 8 ist.

Die Vorrichtung weist ein allseits geschlossenes trichterförmiges Gefäß 1 auf, welches an seinem Deckel 2 mit einem Einlauftrichter 3 und an der Trichterspitze 4 mit einer durch einen Schieber 5, der mittels eines Druckmittelzylinders 6 hin- und herbewegbar ist, versperrbaren Auslaßöffnung 7 versehen ist. Der Einlauftrichter 3 ist ebenfalls mittels eines durch einen Druckmittelzylinder 8 betätigbaren Schiebers 9 verschließbar.

Fluchtend unterhalb des Einlauftrichters 3 ist eine drehbare Hülse 10 am Deckel 2 gelagert, an deren unterem Ende eine erste, sich mit der Hülse mitdrehende Spanneinrichtung 11 mit schwenkbaren Spannbacken 12 befestigt sind, die eine durch den Einlauftrichter 3 in die Hülse eingeschobenen Probenahmensondenteil 13, dessen Durchmesser etwa dem Innendurchmesser der Hülse 10 entspricht, erfassen und ebenfalls in Drehung versetzen. Die Drehung der Hülse 10 erfolgt über ein an der Hülse 10 außenseitig montiertes Kettenrad 14, das über eine Kette 15 von einem Drehantrieb 16 angetrieben wird.

Gemäß dem dargestellten Ausführungsbeispiel wird ein von der Probenahmesonde abgetrennter Probenahmesondenteil 13 in die Vorrichtung durch den Einlauftrichter 3 eingebracht, da die Probenahmesonde in der Regel eine Länge von etwa 2 m aufweist und eine übergroße Vorrichtung erfordern würde. Prinzipiell ist es jedoch auch möglich, in die Vorrichtung die gesamte Probenahmesonde, insbesondere wenn diese kürzer ausgebildet ist, einzubringen.

Wie aus Fig. 2 ersichtlich, werden die Spannbacken 12 mittels eines ortsfest angeordneten Druckmittelzylinders 17 über einen Schwenkhebel 18 betätigt, wobei der Schwenkhebel 18 an einem gegenüber der Hülse 10 höhenverstellbaren, sich mit der Hülse mitdrehenden Ring 19 angreift, der über Hebelgestänge 20 mit den Spannbacken 12 gelenkig verbunden ist.

Fluchtend unterhalb der drehbaren ersten Spanneinrichtung 11 ist eine zweite Spanneinrichtung 21 angeordnet, deren Spannbacken 22 von drehbaren Rollen gebildet sind. Die vertikal gerichteten Spannbacken 22 sind an horizontalen Wellen 23 befestigt, die über durch einen Druckmittelzylinder 24 betätigbare Hebel 25 bewegt werden, so daß die Spannbacken 22 sich voneinander und zueinander unter Festhalten des sich drehenden unteren Endes des Probenahmensondenteiles 13 bewegen können. Die Wellen 23, die Hebel 25 und der Druckmittelzylinder 24 sind an einem Träger 26 angeordnet, der am unteren Ende einer vertikal ausgerichteten und in vertikaler Richtung verstellbaren Kolbenstange 27 eines Druckmittelzylinders 28 befestigt ist, so daß die Spannbacken 22 in vertikaler Richtung höhenverstellbar sind. Die Spannbacken sind weiters um die Achse 29 der Kolbenstange 27 in horizontaler Richtung verschwenkbar. Zum Verschwenken dient ein horizontal angeordneter Druckmittelzylinder 30, dessen Kolbenstange 31 an einem am Zylinder 32 des die Höhenverstellung bewirkenden Druckmittelzylinders 28 angeordneten Schwenkhebel 33 angreift. Um eine Verdrehung der Kolbenstange 27 gegenüber dem Zylinder 32 zu vermeiden, ist die Kolbenstange 27 mit einem in einen Längsschlitz des Zylinders 32 eingreifenden Fortsatz 32' versehen.

In Höhe zwischen der ersten drehbaren Spanneinrichtung 11 und der zweiten höhenverstellbaren Spanneinrichtung 21 ist eine Trennscheibe 34 angeordnet, die in Richtung des Doppelpfeiles 35 zu den Spanneinrichtungen 11, 21 hin und von diesen weg verschwenkbar ist. Hierzu dient (vgl. Fig. 3 und 4) ein an einem um eine vertikale Achse 36 schwenkbaren Tragarm 37 angelenkter Druckmittelzylinder 38. Ein Motor 39 zum Antrieb der Trennscheibe ist fluchtend zur Achse 36 am Deckel 2 montiert. Die Verbindung zwischen Motor 39 und Trennscheibe 34 erfolgt über einen Riementrieb 40.

In Höhe der ersten drehbaren Spanneinrichtung ist in dem Gehäuse 1 eine dritte Spanneinrichtung 41 vorgesehen, die um die Achse 36 der in Mittelstellung befindlichen Trennscheibe 34 etwa symmetrisch zur ersten drehbaren Spanneinrichtung 11 liegt. Diese dritte Spanneinrichtung 41 ist ortsfest angeordnet.

Betätigt wird die Spanneinrichtung 41 mittels eines Druckmittelzylinders 43. Gespannt wird die Spanneinrichtung 41 dadurch, daß die Kolbenstange 44 auf die dem Zylinder zugewendete Spannbacke 42 drückt und die dem Zylinder abgewendete Spannbacke 42 mittels den Zugstangen 45 zu sich zieht. Zum Öffnen der Spanneinrichtung zieht die Kolbenstange 44 und die Zugstangen 4 drücken die Spannbacken 42 auf. Die Lenker 45' halten die Spannbacken 42 in jeder Situation im gleichen Abstand zum Zentrum 45''.

Unterhalb der dritten Spanneinrichtung 41 ist eine durch eine Seitenöffnung 46 des Gefäßes 1 nach außen ragende Probenführungseinrichtung angeordnet, die als Rutsche 47 ausgebildet ist. Der unmittelbar unter der dritten Spanneinrichtung 41 liegende Teil 48 der Rutsche 47 kann gegenüber dem aus dem Gefäß 1 nach außen ragenden Teil 49 mittels eines Druckmittelzylinders 50 aus der in Fig. 1 mit vollen Linien dargestellten Lage in die in Fig. 1 mit strichlierten Linien dargestellte Lage verschwenkt werden.

In der Nähe der ersten und zweiten Spanneinrichtung 11 bzw. 21 ist ein mittels einer Spindel 51 vertikal verstellbarer Höhenanschlag 52 vorgesehen, der mittels eines Druckmittelzylinders 53 aus einer den in die Hülse 10 eingesetzten Probenahmensondenteil 13 in vorbestimmter Höhe haltenden Stellung in eine zurückgeschwenkte Stellung gebracht werden kann.

Wie aus Fig. 1 anhand der Pfeile 54, 55, 56 ersichtlich ist, kann die höhenverstellbare und seitlich verschwenkbare zweite Spanneinrichtung 21 aus einer mit der ersten drehbaren Spanneinrichtung 11 fluchtenden Stellung in eine mit der dritten ortsfesten Spanneinrichtung 41 fluchtende Stellung gebracht werden.

Die Funktion der Vorrichtung ist folgende:

Nach Öffnen des am Einlauftrichter 3 vorgesehenen Schiebers 9 wird ein von der Probenahmensonde mit vorbestimmter Länge 57, d.h. mit vorbestimmter Entfernung 58 zur im Inneren der Probenahmesonde enthaltenen Probe 59 abgelängter Probenahmesondenteil 13 durch den Einlauftrichter 3 eingebracht. Der Probenahmesondenteil 13 fällt auf den Höhenanschlag 52, der so eingestellt ist, daß die Ebene 60 der Trennscheibe 34 oberhalb einer in den von der Probe 59 eingenommenen Innenraum des Probenahmesondenteiles 13 einmündenden seitlichen Öffnung 61 zu liegen kommt. Diese Position des Probenahmesondenteiles 13 ist in Fig. 1 gezeigt.

Nach Festklemmen des Probenahmesondenteiles 13 mittels der Spannbacken 12 der ersten drehbaren Spanneinrichtung 11 und Antreiben der Hülse 10 - wodurch der Probenahmesondenteil 13 in Drehung versetzt wird - und Festklemmen des Probenahmesondenteiles 13 mittels der zweiten Spanneinrichtung 21 mittels deren drehbaren Rollen 22 wird die Trennscheibe 34 in Richtung zum Probenahmesondenteil 13 so weit bewegt, daß das Papprohr 62 des Probenahmesondenteiles 13, nicht jedoch die Probe 59 durchtrennt wird.

Nach Zurückschwenken der Trennscheibe 34 in die in Fig. 1 dargestellte Lage und Zurückschwenken des Höhenanschlages 52 kann der untere Teil 13' des Probenahmesondenteiles 13 durch vertikales Abwärtsbewegen der zweiten Spanneinrichtung 21 vom oberen Teil 13'' des Probenahmesondenteiles 13 abgezogen werden, wobei die Probe 59 in dem unteren Teil des Probenahmesondenteiles stecken bleibt, da die Probe 59 hier durch einen in die seitliche Öffnung 61 des Probenahmesondenteiles 13 ragenden Gießansatz hinreichend fixiert ist. Nach dem Abziehen des die Probe 59 enthaltenden unteren Teiles 13' des Probenahmesondenteiles 13 wird dieser mit Hilfe der zweiten Spanneinrichtung 21 fluchtend unter die dritte Spanneinrichtung 41 bewegt und vertikal angehoben, bis die Spannbacken 42 der dritten Spanneinrichtung 41 das obere Ende der Probe 59 spannen können.

Nach Festspannen der Probe 59 mit Hilfe der dritten Spanneinrichtung 41 und Lösen der zweiten Spanneinrichtung 21 vom unteren Teil 13′ des Probenahmesondenteiles erfolgt mit Hilfe der Trennscheibe 34 ein Durchtrennen der Probe 59, so daß der untere Teil 13′ des Probenahmesondenteiles 13 mit dem in ihm befindlichen Reststück der Probe 59, welches an diesem durch den in die seitliche Öffnung 61 ragenden Gießansatz fixiert ist, abfällt und zur Auslaßöffnung 7 gelangt. Danach werden der schwenkbare Rutschenteil 48 aus der mit vollen Linien dargestellten Lage in die in Fig. 1 mit strichlierten Linien dargestellte Lage verschwenkt, die Spannbacken der dritten Spanneinrichtung geöffnet und das von der Probe 59 abgetrennte Probenstück gelangt über die Rutsche 47 aus dem Gefäß, beispielsweise in eine Rohrpostanlage, mit der es zu einem Labor gefördert wird.

In der Zwischenzeit erfolgte das Öffnen der Spannbacken 12 der ersten Spanneinrichtung 11, so daß der obere Teil 13″ des Probenahmesondenteiles 13 ebenfalls zur Auslaßöffnung 7 gelangt ist. Durch Öffnen des Schiebers 5 der Auslaßöffnung können die beiden Teile 13′ und 13″ aus dem Gefäß 1 entfernt werden.

Der Probenahmesondenteil 13 ist, wie aus Fig. 1 ersichtlich, mit der Schnittfläche 63 nach unten in die Hülse 10 eingesetzt, so daß das ursprünglich untere Ende der Probenahmesonde nach oben ragt. Dies ist deswegen vorteilhaft, da das Ende der Probenahmesonde angekohlt ist und keine genau definierte Entfernung zur seitlichen Öffnung 61 aufweist, wogegen die Schnittfläche 63 des Probenahmesondenteiles 13 ein genaues höhenmäßiges Inlagebringen des Probenahmesondenteiles 13 zur Durchführung des ersten, lediglich das Papprohr 62, nicht jedoch die Probe 59 durchtrennenden Schnittes gestattet.

Um auch bei Abnützung der Trennscheibe das sichere Durchtrennen des Papprohres 62 bis zur Probe 59 sicherzustellen, ist an dem die Trennscheibe 34 haltenden Schwenkarm 37 eine Tasteinrichtung 64 vorgesehen, mit der der Umfang 65 der Trennscheibe abgetastet werden kann. Je nach festgestellter Lage des Umfanges erfolgt dann die Steuerung der Schwenkbewegung zur Durchführung des ersten Schnittes.

Um das Gefäß 1 mit einem nicht brennbaren Gas, wie Stickstoff, füllen zu können, mündet eine Gaszuführungsleitung 66 in das Gefäß.

Die Erfindung beschränkt sich nicht auf das dargestellte Ausführungsbeispiel, sondern sie kann in verschiedener Hinsicht modifiziert werden. Beispielsweise ist es möglich, auf die dritte Spanneinrichtung zu verzichten, wenn die aus dem unteren Teil 13″ herausragende Probe 59 mittels der Spannbacken 12 der ersten Spanneinrichtung nach dem ersten Schnitt zur Durchführung des zweiten Schnittes festklemmbar ist.

**Patentansprüche**

1. Verfahren zum Gewinnen einer Probe aus einem Schmelzensumpf mittels einer zylindrischen Probenahmesonde (13), die eine Aufnahmeöffnung für die Probe besitzt, dadurch gekennzeichnet, daß nach Probenahme zunächst mit einem ersten, sich in radialer Richtung der Probenahmesonde erstreckenden Umfangsschnitt die Probenahmesonde oder ein von ihr abgelängter Probenahmesondenteil (13) in Höhe der Probe (59) durchtrennt wird, wobei jedoch die Probe (59) ungeschnitten bleibt, daß sodann der die Probe (59) haltende Teil (13′) der Probenahmesonde bzw. des Probenahmesondenteiles (13) vom restlichen Teil (13″) der Probenahmesonde bzw. des Probenahmesondenteiles (13) durch Abziehen in axialer Richtung getrennt wird und daß anschließend der aus dem Teil (13′) der Probenahmesonde bzw. des Probenahmesondenteiles (13) herausragende Teil der Probe (59) mittels eines zweiten Schnittes vom die Probe (59) haltenden Teil (13′) der Probenahmesonde bzw. des Probenahmesondenteiles (13) abgetrennt wird.

2. Verfahren nach Anspruch 1, dadurch gekennzeichnet, daß der Umfangsschnitt unter Drehung der Probenahmesonde bzw. des Probenahmesondenteiles (13) um ihre (seine) Längsachse durchgeführt wird.

3. Vorrichtung zur Durchführung eines Verfahrens zum Gewinnen einer probe aus einem Schmeltzensumpf mittels einer zylindrischen Probenahmesonde (13), gekennzeichnet durch
   - eine erste und zweite Spanneinrichtung (11, 21) zum Halten der Probenahmesonde bzw. eines Probenahmesondenteiles (13) beiderseits der Probe (59), wobei die Spanneinrichtungen zueinander und voneinander mittels einer Bewegungseinrichtung bewegbar sind,
   - und eine Schneideinrichtung, insbesondere eine Trennscheibe (34), die in Richtung zur Probe (59) und von dieser wegbewegbar ist.

4. Vorrichtung nach Anspruch 3, dadurch gekennzeichnet, daß mindestens eine Spanneinrichtung (11) um die Achse der Probenahmesonde bzw. des Probenahmesondenteiles (13) drehbar ist.

5. Vorrichtung nach Anspruch 4, dadurch gekennzeichnet, daß die Spannbacken (22) der zweiten Spanneinrichtung (21) als drehbare Rollen ausgebildet sind, deren Drehachse parallel zur Achse der Probenahmesonde bzw. des Probenahmesondenteiles (13) gerichtet ist.

6. Vorrichtung nach einem oder mehreren der Ansprüche 3 bis 5, dadurch gekennzeichnet, daß die zweite Spanneinrichtung (21) mittels einer Stelleinrichtung (28) von und zur ersten Spanneinrichtung (11) bewegbar ist.

7. Vorrichtung nach einem oder mehreren der Ansprüche 3 bis 6, dadurch gekennzeichnet, daß oberhalb der ersten Spanneinrichtung (11) ein Einlauftrichter (3) zur Führung der Probenahmesonde bzw. des Probenahmesondenteiles (13) vorgesehen ist und unterhalb des Einlauftrichters (3) ein höhenverstellbarer mit der Probenahmesonde bzw. dem Probenahmesondenteil (13) in und außer Eingriff bringbarer Anschlag (52) vorgesehen ist.

8. Vorrichtung nach einem oder mehreren der Ansprüche 3 bis 7, gekennzeichnet durch eine dritte Spanneinrichtung (41) zum Einspannen der Probe (59) des die Probe enthaltenden Teiles (13') der Probenahmesonde bzw. des Probenahmesondenteiles (13).

9. Vorrichtung nach Anspruch 8, dadurch gekennzeichnet, daß die zweite Spanneinrichtung (21) von einer mit der ersten Spanneinrichtung (11) fluchtenden Position in eine zur dritten Spanneinrichtung (41) fluchtende Position bewegbar ist.

10. Vorrichtung nach Anspruch 8 oder 9, dadurch gekennzeichnet, daß die dritte Spanneinrichtung (41) seitlich neben der ersten Spanneinrichtung (11) in gleicher Höhe wie diese angeordnet ist und die Schneideinrichtung (34) wahlweise zur ersten oder zur dritten Spanneinrichtung (11 bzw. 41) bewegbar ist.

11. Vorrichtung nach einem oder mehreren der Ansprüche 9 bis 10, dadurch gekennzeichnet, daß unterhalb der dritten Spanneinrichtung (41) eine Probenführungseinrichtung (47) angeordnet ist, die in und aus einer die Probe weiterfördernden Stellung bringbar ist.

12. Vorrichtung nach einem oder mehreren der Ansprüche 9 bis 11, dadurch gekennzeichnet, daß die erste, zweite und dritte Spanneinrichtung (11, 21, 41), die Schneideinrichtung (34) sowie die Probenführungseinrichtung (47) in einem trichterförmigen Gefäß (1) angeordnet sind, das an der Trichterspitze (4) eine Auslaßöffnung (7) aufweist.

13. Vorrichtung nach Anspruch 12, dadurch gekennzeichnet, daß die Auslaßöffnung (7) mittels einer Verschlußeinrichtung, wie eines Schiebers (5), verschließbar ist.

14. Vorrichtung nach einem oder mehreren der Ansprüche 7 bis 13, dadurch gekennzeichnet, daß der Einlauftrichter (3) mittels einer Verschlußeinrichtung, wie eines Schiebers (9), verschließbar ist.

15. Vorrichtung nach den Ansprüchen 13 und 14, dadurch gekennzeichnet, daß in das Gefäß (1) eine Gaszuführungsleitung (66) zur Füllung des Gefäßes (1) mit einem nicht brennbaren Gas, wie Stickstoff, mündet.

16. Vorrichtung nach Anspruch 3, dadurch gekennzeichnet, daß zum Ermitteln des Durchmessers der Trennscheibe (34) eine Tasteinrichtung (64) vorgesehen ist.

**Claims**

1. A method of taking a sample from a melt sump by means of a cylindrical sampling probe (13) including a reception opening for the sample, characterized in that, after taking a sample, the sampling probe or a sampling probe part (13) cut to length from the same at first is severed by a first circumferential cut extending in the radial direction of the sampling probe at the height of the sample (59), the sample (59) yet remaining uncut, that the section (13') of the sampling probe or the sampling probe part retaining the sample (59) is then separated from the remaining section (13") of the sampling probe or sampling probe part (13) by being drawn off in the axial direction, and that subsequently the portion of the probe (59) projecting out of the section (13') of the sampling probe or sampling probe part (13) is separated from the section (13') of the sampling probe or sampling probe part (13) retaining the sample (59) by means of a second cut.

2. A method according to claim 1, characterized in that the circumferential cut is effected by rotating the sampling probe or sampling probe part (13) about its longitudinal axis.

3. An arrangement for carrying out a method of taking a sample from a melt sump by means of a cylindrical sampling probe (13), characterized by
   - a first and a second clamping means (11, 21) for retaining the sampling probe or a sampling probe part (13), provided on both sides of the sample (59), the clamping means being movable towards and away from each other by a displacing means,

- and a cutting means, in particular a cutting wheel (34), which is movable towards and away from the sample (59).

4. An arrangement according to claim 3, characterized in that at least one clamping means (11) is rotatable about the axis of the sampling probe or of the sampling probe part (13).

5. An arrangement according to claim 4, characterized in that the clamping jaws (22) of the second clamping means (21) are designed as rotatable rollers whose axes of rotation are oriented parallel to the axis of the sampling probe or sampling probe part (13).

6. An arrangment according to one or several of claims 3 to 5, characterized in that the second clamping means (21) is movable towards and away from the first clamping means (11) by an adjustment means (28).

7. An arrangement according to one or several of claims 3 to 6, characterized in that an intake funnel (3) is provided above the first clamping means (11) for guiding the sampling probe or sampling probe part (13) and a stop (52) adjustable in height is provided below the intake funnel (3) so as to be placeable into and out of engagement with the sampling probe or sampling probe part (13).

8. An arrangement according to one or several of claims 3 to 7, characterized by a third clamping means (41) for clamping the probe (59) of the section (13') of the sampling probe or sampling probe part (13), containing the sample.

9. An arrangement according to claim 8, characterized in that the second clamping means (21) is movable from a position in alignment with the first clamping means (11) into a position in alignment with the third clamping means (41).

10. An arrangement according to claim 8 or 9, characterized in that the third clamping means (41) is arranged laterally of the first clamping means (11) on the same level as the latter and the cutting means (34) facultatively is movable to the first or to the third clamping means (11 or 41).

11. An arrangement according to one or several of claims 9 to 10, characterized in that a sample guiding means (47) is arranged below the third clamping means (41) and is placeable into and out of a position conveying the sample on.

12. An arrangement according to one or several of claims 9 to 11, characterized in that the first, second and third clamping means (11, 21, 41), the cutting means (34) as well as the sample guiding means (47) are arranged in a funnel-shaped vessel (1) including an outlet opening (7) on top of the funnel (4).

13. An arrangement according to claim 12, characterized in that the outlet opening (7) is closeable by a closing means, such as a slider (5).

14. An arrangement according to one or several of claims 7 to 13, characterized in that the intake funnel (3) is closeable by a closing means, such as a slider (9).

15. An arrangement according to claims 13 and 14, characterized in that a gas supply duct (66) runs into the vessel (1) to fill the vessel (1) with a non combustible gas, such as nitrogen.

16. An arrangement according to claim 3, characterized in that a detection means (64) is provided for detecting the diameter of the cutting wheel (34).

## Revendications

1. Procédé pour obtenir un échantillon d'un bassin de fusion au moyen d'une sonde cylindrique (13) de prise d'échantillon qui possède une ouverture de réception pour l'échantillon, caractérisé en ce qu'après la prise de l'échantillon, la sonde de prise d'échantillon, ou une partie (13) de sonde de prise d'échantillon découpée à longueur dans cette sonde est coupée transversalement à la hauteur de l'échantillon (59) par une première coupe circonférentielle qui s'étend dans la direction radiale de la sonde de prise d'échantillon, l'échantillon (59) restant cependant non découpé, en ce que, ensuite, la portion (13') de la sonde de prise d'échantillon ou de la partie (13) de la sonde de prise d'échantillon, qui contient l'échantillon (59) est séparée de la portion restante (13") de la sonde de prise d'échantillon ou de la partie (13) de sonde de prise d'échantillon par traction dans la direction axiale et en ce que, ensuite, la partie de l'échantillon (59) qui émerge de la portion (13') de la sonde de prise d'échantillon ou de la partie (13) de la sonde de prise d'échantillon est séparée, par une deuxième coupe, de la portion (13') de la sonde de prise d'échantillon ou de la partie (13) de sonde de prise d'échantillon qui contient l'échantillon (59).

2. Procédé selon la revendication 1, caractérisé en ce que la coupe circonférentielle est exécutée avec rotation de la sonde de prise d'échantillon ou de la partie (13) de la sonde de prise d'échantillon autour de son axe longitudinal.

3. Dispositif pour la mise en oeuvre d'un procédé pour obtenir un échantillon d'un bassin de fusion au moyen d'une sonde cylindrique (13) de prise d'échantillon, caractérisé par
   - des premier et deuxième dispositifs de serrage (11, 21) destinés à tenir la sonde de prise d'échantillon ou une partie (13) de sonde de prise d'échantillon de part et d'autre de l'échantillon (59), les dispositifs de serrage pouvant se déplacer dans les sens qui les rapprochent ou les éloignent l'un de l'autre sous l'action d'un dispositif de déplacement,
   - et un dispositif de coupe, en particulier un disque de tronçonneuse (34) qui peut se rapprocher et s'éloigner l'échantillon (59).

4. Dispositif selon la revendication 3, caractérisé en ce qu'au moins un dispositif de serrage (11) peut tourner autour de l'axe de la sonde de prise d'échantillon ou de la partie (13) de la sonde de prise d'échantillon.

5. Dispositif selon la revendication 4, caractérisé en ce que les mâchoires de serrage (22) du deuxième dispositif de serrage (21) sont constituées par des galets rotatifs dont l'axe de rotation est orienté parallèlement à l'axe de la sonde de prise d'échantillon ou de la partie (13) de la sonde de prise d'échantillon.

6. Dispositif selon une ou plusieurs des revendications 3 à 5, caractérisé en ce que le deuxième dispositif de serrage (21) peut être éloigné et rapproché du premier dispositif de serrage (11) au moyen d'un dispositif de réglage (28).

7. Dispositif selon une ou plusieurs des revendications 3 à 6, caractérisé en ce qu'au-dessus du premier dispositif de serrage (11) est prévu en entonnoir d'entrée (3) servant à guider la sonde de prise d'échantillon ou la partie (13) de la sonde de prise d'échantillon et, au-dessous de l'entonnoir d'entrée (3), est prévue une butée (52) réglable en hauteur et qui peut être mise en prise ou hors de prise avec la sonde de prise d'échantillon ou avec la partie (13) de la sonde de prise d'échantillon.

8. Dispositif selon une ou plusieurs des revendications 3 à 7, caractérisé par un troisième dispositif de serrage (41) servant à serrer l'échantillon (59) de la portion (13') de la sonde de prise d'échantillon ou de la partie (13) de la sonde de prise d'échantillon qui contient l'échantillon.

9. Dispositif selon la revendication 8, caractérisé en ce que le deuxième dispositif de serrage (21) peut être déplacé d'une position qui est dans l'alignement du premier dispositif de serrage (1) à une position qui est dans l'alignement du troisième dispositif de serrage (41).

10. Dispositif selon la revendication 8 ou 9, caractérisé en ce que le troisième dispositif de serrage (41) est disposé latéralement au premier dispositif de serrage (11) à la même hauteur que celui-ci, et le dispositif de coupe (34) peut être amené sélectivement au premier ou au troisième dispositif de serrage (11 ou 41).

11. Dispositif selon une ou plusieurs des revendications 9 à 10, caractérisé en ce que, au-dessous du troisième dispositif de serrage (41) est disposé un dispositif (47) de guidage de l'échantillon qui peut être placé dans une position qui évacue l'échantillon ou hors de cette position.

12. Dispositif selon une ou plusieurs des revendications 9 à 11, caractérisé en ce que les premier, deuxième et troisième dispositifs de serrage (11, 21, 41), le dispositif de coupe (34) ainsi que le dispositif (47) de guidage de l'échantillon sont disposés dans un récipient (1) en forme d'entonnoir qui présente une ouverture de sortie (7) à la pointe (4) de l'entonnoir.

13. Dispositif selon la revendication 12, caractérisé en ce que l'ouverture de sortie (7) peut être fermée à l'aide d'un dispositif de fermeture tel qu'une vanne (5).

14. Dispositif selon une ou plusieurs des revendications 7 à 13, caractérisé en ce que l'entonnoir d'entrée (3) peut être fermé à l'aide d'un dispositif de fermeture tel qu'une vanne (9).

15. Dispositif selon les revendications 13 et 14, caractérisé en ce qu'une conduite (66) d'amenée du gaz, servant à remplir le récipient (1) d'un gaz non combustible tel que l'azote, débouche dans le récipient (1).

16. Dispositif selon la revendication 3, caractérisé en ce qu'un dispositif palpeur (64) est prévu pour mesurer le diamètre du disque de tronçonneuse (34).

## FIG. 1

FIG. 2

FIG. 3

FIG. 4

FIG. 8

FIG. 9

FIG. 5

FIG. 6

FIG. 7